# EUROPEAN PATENT APPLICATION

(11) **EP 2 113 825 A1**
(43) Date of publication of application: **04.11.2009**
(21) Application number: 08711105.0
(22) Date of filing: 12.02.2008
(51) Int. Cl.: G06F 3/02, H04M 1/02, H04M 1/23

(54) **PORTABLE TERMINAL AND METHOD FOR OPERATING PORTABLE TERMINAL**

(30) Priority: 20.02.2007 JP 2007039967
(71) Applicant: NEC Corporation, Minato-ku Tokyo 108-8001 (JP)
(72) Inventor: FUJII, Kouhei, Tokyo 108-8001 (JP)
(74) Representative: Glawe, Delfs, Moll
(86) International application number: PCT/JP2008/052241
(87) International publication number: WO 2008/102665

(57) **Abstract**

It is required to provide a small-sized, easy-to-hold apparatus which facilitates a character input operation and a sentence editing operation by use of keys and in which a character input operation and a screen indication operation by use of a touch panel are stable. By arranging the keypad on the receiver side and the display screen on the microphone side, the key-in operation is facilitated and the range of choice is enlarged for the antenna layout designing. The main body of the cellular phone can be held to be wrapped by the hand, that is, the phone is configured not to be easily dropped. Due to the configuration, it cannot occur that operability is deteriorated for both of the keys and the touch panel.

## Description

### TECHNICAL FIELD

The present invention relates to a technique which facilitates operation to start use of it and operation to end the use of it and which allows it to be easily held when inputting letters to start operation to thereby facilitate inputting letters.

### RELATED ART

In a related cellular phone, cursor keys to be used, for example, to input letters and to edit sentences are placed nearer ,compared with a screen display unit. This arrangement is almost the same as for a notebook-type personal computer and the like. However, in order for the user to easily operate the cellular phone with the cellular phone held in the hand, it is required to elongate the section of the cellular phone to be held by the hand or to adopt a configuration to slide an input module.

A desire exists for a cellular phone with a large display area, for example, to view a TV program; at the same time, a desire exists for a small-sized cellular phone primarily for a call and mail function. When the display area is large, the key input area is narrow; hence, the key-in operation is troublesome.

When inputting letters or operating screens, the section of the cellular phone held by the hand becomes shorter and it is likely that the cellular phone easily falls down; it has hence been desired to improve this. Particularly, for a small-sized cellular phone, it is not easy to hold the phone when operating keys, which hence increases the number of users who conduct operation by use of both hands.

For a small-sized cellular phone, when the antenna of the cellular phone is placed on the microphone side, it is easy to meet the safety standard of radio waves; however, with the conventional key layout, sensitivity of the antenna lowers when the microphone side is grasped for the key operation; therefore, a countermeasure against this has been desired.

When a user views a screen, it is likely that a glance at the screen is stolen by a person next to the user; hence, many persons employ, for example, a sheet to restrict the viewing angle; however, the light transmission ratio is reduced, and it has accordingly been desired that a glance at the screen is not easily stolen.

In this connection, there has been proposed a technique capable of providing a cellular phone which provides good operability by arranging a button operation section in an upper section of the telephone and the display section in a lower section thereof (for example, Patent Document 1).
Patent Document 1: Japanese Utility Model Registration Pub. No. 3079745

### DISCLOSURE OF THE INVENTION

### PROBLEM TO BE SOLVED BY THE INVENTION

However, a desire exists for an apparatus in which the touch panel operation can be simultaneously carried out along with the key-in operation to improve operability and a desire exists for an apparatus in which the key-in operation can be easily conducted even when a one-segment screen is displayed next to the display screen.

The present invention has been devised to solve the problem described above. An object thereof is to provide a small-sized, easy-to-hold portable terminal and an operation method for the portable terminal in which a character input operation and a sentence editing operation by use of keys are facilitated and a character input operation and screen indication operation by use of a touch panel are stable.

### MEANS FOR SOLVING THE PROBLEM

To achieve the object above, the present invention has the following aspects.

The present invention provides a portable terminal including keys for inputting a character and for moving a character editing cursor, and a display section for displaying an input character, wherein:
a character display area is arranged nearer relative to the keys with respect to operation;
a set of keys rotates and stops at a determined angle to thereby facilitate a key-in operation by one hand; and
a touch panel is formed on a display screen.

Also, the present invention provides a portable terminal including keys for inputting a character and for moving a character editing cursor, and a display section for displaying an input character, wherein
the keys rotates 90 degrees.

Moreover, the present invention provides a portable terminal including keys for inputting a character and for moving a character editing cursor, and a display section for displaying an input character, wherein
the keys rotates 180 degrees.

Further, the present invention provides an operation method for a portable terminal including keys for inputting a character and for moving a character editing cursor, and a display section for displaying an input character, wherein a character display area is arranged nearer relative to the keys with respect to operation and
to facilitate a key-in operation by one hand, a set of keys rotates and stops at a determined angle in use, and a touch panel formed on a display screen is operated by the other hand.

Also, the present invention provides an operation method for a portable terminal including keys for inputting a character and for moving a character editing cursor, and a display section for displaying an input character, wherein the keys of the portable terminal are rotated 90 degrees for use.

Furthermore, the present invention provides an operation method for a portable terminal including keys for inputting a character and for moving a character editing cursor, and a display section for displaying an input character, wherein the keys of the portable terminal are rotated 180 degrees for use.

### ADVANTAGES OF THE INVENTION

In accordance with the present invention, there is provided a small-sized, easy-to-hold apparatus in which a character input operation and a sentence editing operation by use of keys are facilitated and a character input operation and a screen indication operation by use of a touch panel are stable.

### BEST MODE FOR CARRYING OUT THE INVENTION

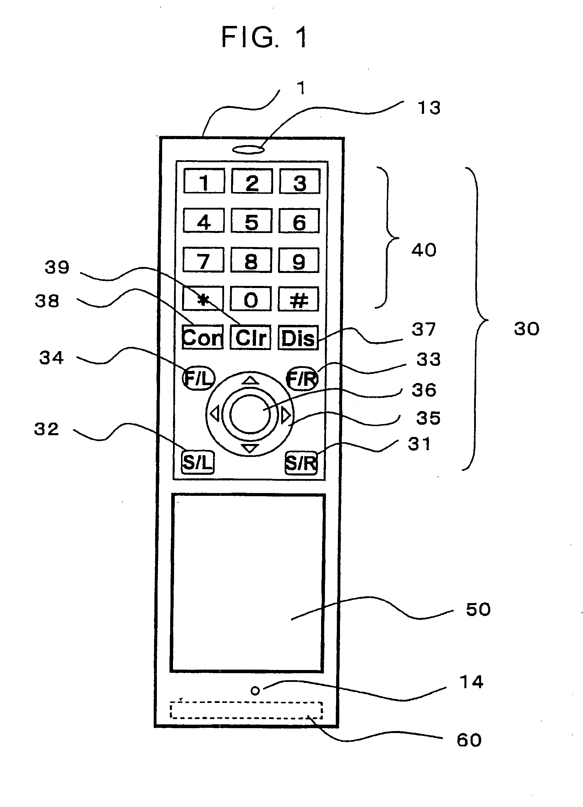

Next, description will be given in detail of a first exemplary embodiment of the present invention by referring to drawings. Referring to FIG. 1, in a non-folding-type cellular phone of the present embodiment, a keypad 30 is disposed on a receiver side and a display screen 50 is arranged on a microphone side.

The keypad 30 is a module including a cursor key 35, a determination key 36, soft keys 31 and 32, function keys 33 and 34, a disconnection key 37, a reception/transmission key 38, a clear key 39, and a number/character key 40.

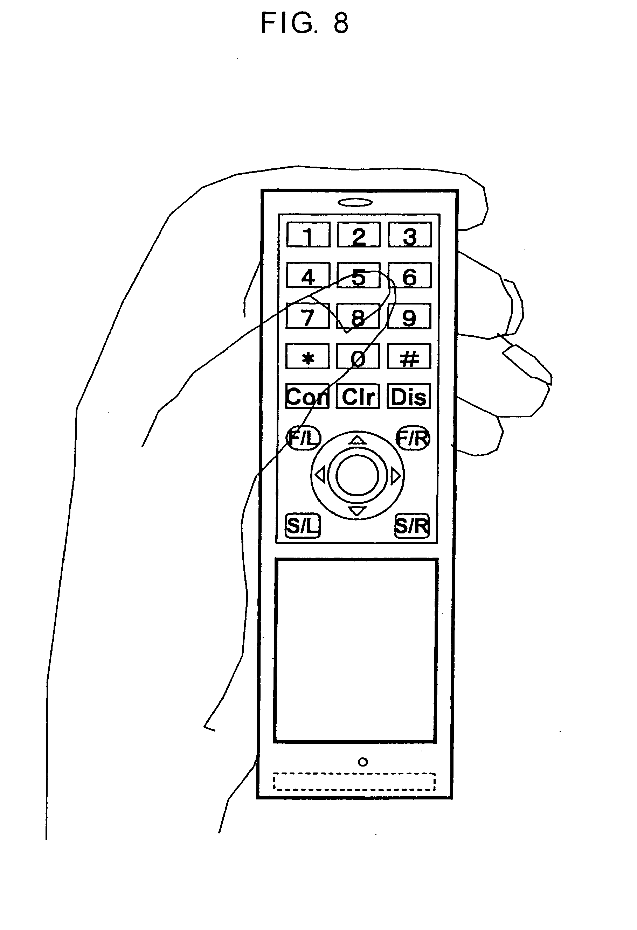

To conduct a key operation, the user holds the cellular phone as shown in FIG. 8 and operates keys by the thumb. In this situation, since a main body 1 of the cellular phone is lightly grasped by the fingers other than the thumb, it is not likely that the user drops the cellular phone.

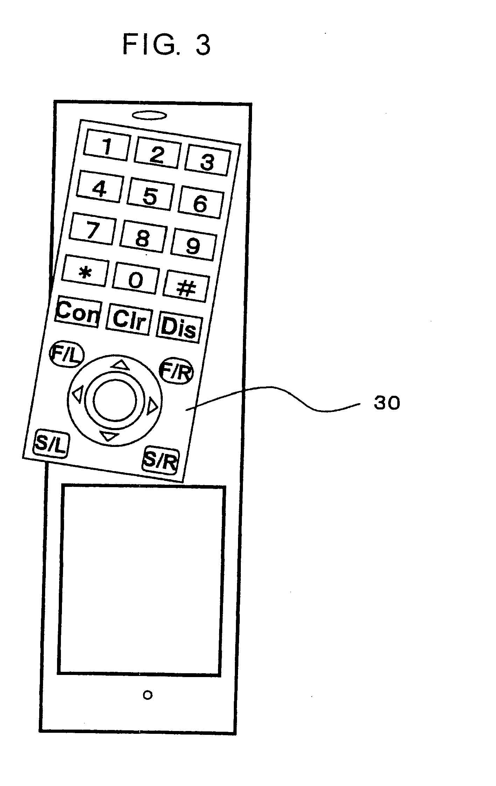

In a case wherein the ball of the thumb conceals the display screen, the keypad 30 is inclined in use as shown in FIG. 3.

The main body is held to be wrapped by the palm, which hence reduces the chance in which the display screen is viewed by the other people.

By disposing the antenna on the microphone side of the body, the designing against SAR is facilitated; moreover, the antenna is outside the hand as a result, which hence reduces deterioration in sensitivity.

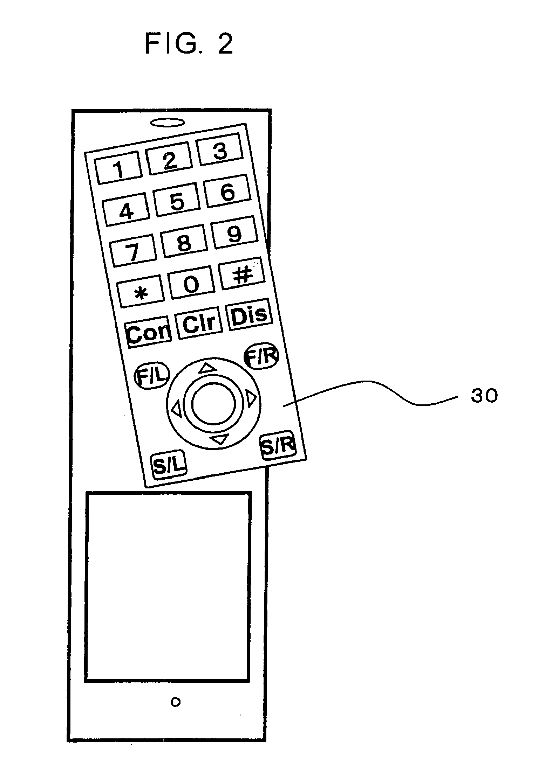

FIG. 2 shows a situation to conduct a key-in operation by the right hand, and FIG. 3 shows a situation to conduct a key-in operation by the left hand. The keypad 30 is inclined in both cases.

By slanting the keypad 30, the chance in which fingers conceal the screen display during the letter input operation by fingers is reduced.

Even if the keypad is not particularly inclined, the key-in operation in the state of FIG. 1 is practically conducted without any trouble.

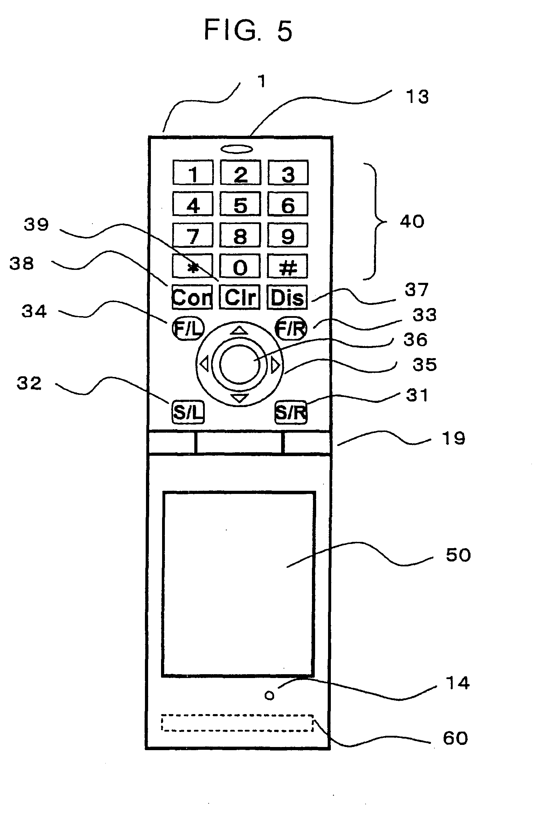

In the cellular phone, there is employed a key (to be referred to as a soft key) which uses a key definition indicated on the screen; a right soft key 31 and a left soft key 32 are shown in FIG. 5. The key definition on the screen relatively corresponds to the key position, which is the same as for the related art.

FIG. 4 shows a case wherein the cursor key 35, the determination key 36, the soft keys 31 and 32, the function keys 33 and 34, the disconnection key 37, the reception/transmission key 38, and the clear key 39 are arranged over the number/character key 40.

FIG. 5 shows, like FIG. 7, a folding-type cellular phone and indicates a specific example of the key layout. FIG. 6 is a side view of FIG. 5.

FIG. 7 is a perspective view of an exemplary embodiment of the cellular phone in accordance with the present invention. The cellular phone of FIG. 7 is a folding-type cellular phone which bends at a hinge 19; there is shown a case in which the thumb of the left hand is used to input data and the right hand is employed to operate the touch panel.

For the thumb of the left hand to easily carry out the key-in operation, the lower side of the keypad 30 which is a set of keys is moves to the left side. Although the hand and fingers are not shown, the user securely holds the lower-side housing of a base-side main body 12 of a touch panel 51 with bolls of fingers facing upwards.

If the right hand is used to conduct the key-in operation, it is also possible to move the lower side of the keypad to the right.

In order that the palm does not hinder the antenna characteristic, an antenna 60 of the cellular phone is in a housing near a microphone 14. The antenna may be installed on the receiver 13 side; however, in this situation, it is required to fully take a countermeasure against SAR.

Incidentally, the embodiment described above is a favorable embodiment of the present invention and can be modified in various ways without departing from the gist of the present invention. For example, if the keys are rotable by 90 degrees, an easy key operation can be realized even when the one-segment screen is displayed next to the display screen. As compared with the scheme to rotate the screen, the associated mechanism can be more simply constructed. Further, if the keys are rotable by 180 degrees, a desired input (keys are reversed) can be implemented.

This application is based upon and claims the benefit of priority from Japanese patent application No. 2007-039967, filed on February 20, 2007, the disclosure of which is incorporated herein in its entirety by reference.

### INDUSTRIAL APPLICABILITY

The present invention is applicable to a small-sized, easy-to-hold apparatus which facilitates a character input operation and a sentence editing operation by use of keys and in which a character input operation and a screen indication operation by use of a touch panel are stable.

### BRIEF DESCRIPTION OF DRAWINGS

[FIG. 1] is a diagram of an exemplary embodiment in a case of a non-folding-type cellular phone of the present invention.
[FIG. 2] is one of diagrams showing utilization states of FIG. 1.
[FIG. 3] is one of diagrams showing utilization states of FIG. 1.

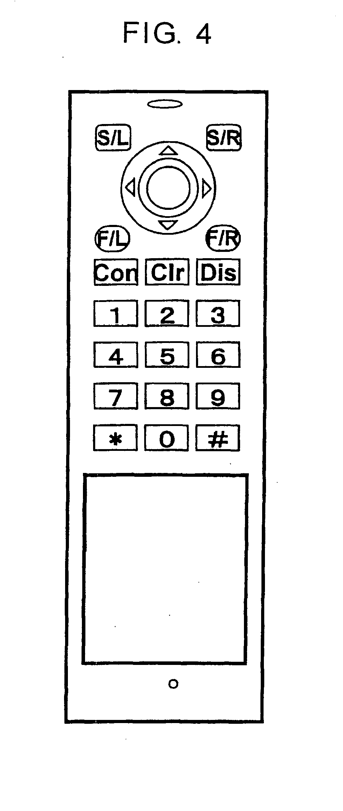

[FIG. 4] is another exemplary embodiment of a key layout of the present invention.
[FIG. 5] is one of exemplary embodiments for key definition of a folding-type mobile telephone.

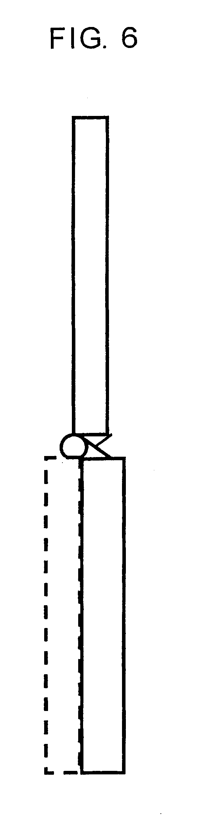

[FIG. 6] is a side view of FIG. 5.

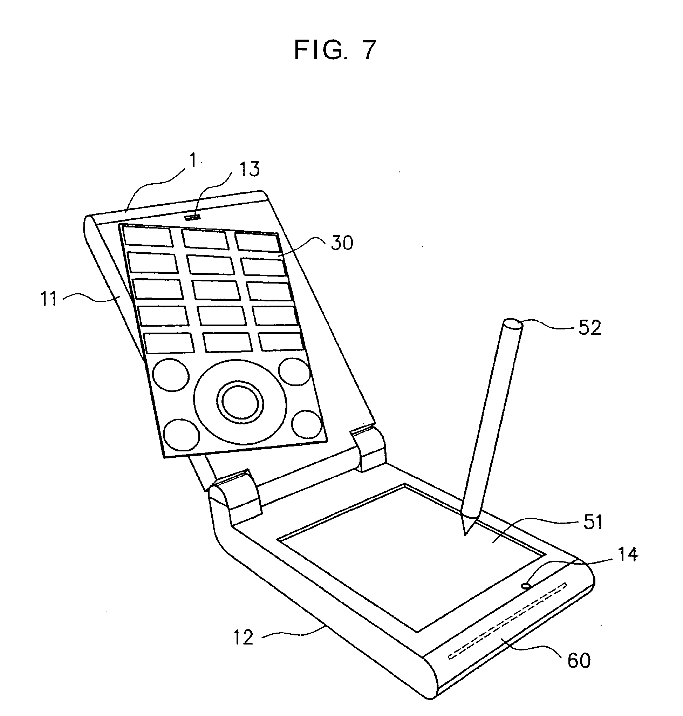

[FIG. 7] is a perspective view of one of exemplary embodiments for a folding-type mobile telephone.
[FIG. 8] is a diagram showing a utilization state for a non-folding-type mobile telephone.

### DESCRIPTION OF REFERENCE NUMERALS

- 1: Main body
- 11: Flip-side main body
- 12: Base-side main body
- 13: Receiver hole
- 14: Microphone hole
- 19: Hinge
- 30: Keypad
- 31: Right soft key
- 32: Left soft key
- 33: Right function key
- 34: Left function key
- 35: Cursor key
- 36: Determination key
- 37: Disconnection key
- 38: Reception/transmission key
- 39: Clear key
- 40: Number/character key
- 50: Display section
- 51: Touch panel
- 52: Touch pen
- 60: Antenna

## Claims

1. A portable terminal comprising: keys for inputting a character and for moving a character editing cursor; and a display section for displaying an input character, **characterized in that:**
a character display area is arranged nearer relative to the keys with respect to operation;
a set of keys rotates and stops at a determined angle to thereby facilitate a key-in operation by one hand; and
a touch panel is formed on a display screen.

2. A portable terminal comprising: keys for inputting a character and for moving a character editing cursor; and a display section for displaying an input character, **characterized in that:**
the keys rotates 90 degrees.

3. A portable terminal comprising: keys for inputting a character and for moving a character editing cursor; and a display section for displaying an input character, **characterized in that:**
the keys rotates 180 degrees.

4. An operation method for a portable terminal comprising: keys for inputting a character and for moving a character editing cursor; and a display section for displaying an input character, wherein a character display area is arranged nearer relative to the keys with respect to operation, **characterized in that:**
to facilitate a key-in operation by one hand, a set of keys rotates and stops at a determined angle in use, and a touch panel formed on a display screen is operated by the other hand.

5. An operation method for a portable terminal comprising: keys for inputting a character and for moving a character editing cursor, and a display section for displaying an input character, **characterized in that** the keys of the portable terminal are rotated 90 degrees for use.

6. An operation method for a portable terminal comprising: keys for inputting a character and for moving a character editing cursor, and a display section for displaying an input character, **characterized in that** the keys of the portable terminal are rotated 180 degrees for use.
